# EUROPEAN PATENT APPLICATION

(11) **EP 2 733 377 A2**
(43) Date of publication of application: **21.05.2014**
(21) Application number: 13005354.9
(22) Date of filing: 14.11.2013
(51) Int. Cl.: F16D 65/12

(54) **Disc brake**

(30) Priority: 15.11.2012 SI 201200341
(71) Applicant: Kovis, d.o.o., 8250 Brezice (SI)
(72) Inventor: Smolej, Ivan, 10432 Bregana (HR)
(74) Representative: Golmajer Zima, Marjanca

(57) **Abstract**

The object of the invention is a disc brake (1), especially for rail vehicles, comprising two coaxial, mutually parallel annular brake discs (2) arranged on a vehicle wheel (3) in a way that they are connected by a plurality of pins (8) arranged in axial direction of the wheel, each of them being fixed by means of two eyebolts (11) with pins (12) arranged in radial direction of the brake disc, said discs (2) engaging with holes in said pin (8). An advantage of the disc brake (1) of the invention lies in that the external plane (2a) of the brake disc is integral which contributes to a lower degree of wear of the brake discs and the brake pads of the brake shoe. A further advantage is also the fact that mounting/dismounting of brake discs is simple, rapid and does not require any special tools.

## Description

### Field of Invention

The object of the invention refers to a disc brake, especially to a disc brake for rail vehicles that is fastened to a vehicle wheel.

### Prior Art

Disc brakes are devices utilized to reduce speed of vehicles or to stop them. A disc brake comprises a pair of identical brake discs, which are fastened each at a respective side of a vehicle wheel, and a brake shoe with brake pads that engage with external side surfaces of the disc brake during braking. Prior art has solutions to fastening brake discs by a plurality of circularly arranged screws that are arranged in axial direction of the wheel through two through holes in brake discs and a vehicle wheel. Such a solution is also known from patent EP 1 460 283.

During braking, kinetic energy of a vehicle converts to heat due to friction between the brake disc and the brake pads of the break shoe, which results in the pair of brake discs getting heated. The brake discs do not get heated equally due to the presence of through holes in the brake discs, which causes mechanical tensions in the material of the brake discs and consequently microscopic cracks in the proximity of the holes that gradually extend to larger cracks. Such cracks can ultimately lead to fracture of the brake disc. A huge amount of heat is released especially during braking of vehicles that move with high velocity or have a huge mass, such as rail vehicles.

A further disadvantage of the prior art is reflected during braking in wet conditions. The water trapped in through holes of the brake discs leaks during a drive and causes formation of a thin layer of water between the brake disc and the brake pad of the brake shoe. This reduces the friction coefficient of brake surfaces and reduces the effectiveness of braking.

A further disadvantage of the prior art is an increased wear of the brake pads of the brake shoe owing to the presence of holes in the brake surface of the brake discs.

### Technical Problem

The technical problem solved by the present invention is how to fasten two brake discs of a disc brake to a vehicle wheel without affecting the integrity of the surfaces of brake discs that engage with brake pads of the brake shoe during braking, and how to simplify mounting of the brake discs to a wheel and dismounting of same from a wheel in terms of a shorter time needed for mounting/dismounting.

### Solution to the Technical Problem

A solution to the technical problem according to the present invention resides in a disc brake comprising:
- two identical annular brake discs arranged in a mounted condition each at one side of a vehicle wheel in a way that two brake planes face outwards, wherein each respective brake disc is provided at its inner side by a plurality of circularly arranged first holes in axial direction of a wheel and a plurality of second holes each extending in radial direction of the wheel and connecting an internal circular plane of the annular brake disc with one of the first holes, so that the central axes of the first and the second hole intersect at a substantially right angle, and a plurality of third holes formed in parallel with the first holes and radially distant from same towards the central axis of the brake discs,
- a plurality of first pins each arranged in one of the first holes of both brake discs and through a vehicle wheel, wherein in each of the first pins two respective fourth holes are formed, the central axes of which substantially coincide with the two central axes of the second holes when the brake discs are in a mounted condition,
- a plurality of eyebolts pre-stressed by a first helical spring, each eyebolt being provided with a second pin having an inner thread screwed onto said bolt, wherein the first spring is arranged on a bolt shank in a way to lean with one end against a plane of the second pin and with a second end against a washer arranged between the first spring and a wall of the third hole,
- a plurality of securing elements, each of them arranged in a non-mounted condition of the brake discs under a head of the eyebolt and leaning against the internal circular plane of the annular brake disc, wherewith the eyebolt is prevented to move radially in direction towards the external circumference of the brake disc.

The first pin is formed of two parts, wherein the parts of the first pin are connected with each other by a cylindrical screw. The screw is tightened into a first part of the first pin, whereas a second part of the first pin has a second spring arranged therebetween and can move axially. In this manner, differences in thicknesses of wheels, onto which brake discs are mounted, are compensated.

In a condition when not mounted, the eyebolts with the second pin are in a position shifted towards the central axis of the brake disc and secured by means of securing elements. When the brake discs are mounted, the securing elements are taken out, the first spring pushes a respective eyebolt in radial direction externally of the brake disc in a way that a respective second pin engages with the fourth hole in the first pin, wherewith the brake discs are fixed onto a vehicle wheel. When the brake discs are dismounted, a conventional tool (e. g. a screwdriver) is used to take the eyebolt out of the fourth hole and protected by a securing element.

An advantage of the invention over known solutions lies in the fact that the brake discs and the brake pads of the brake shoe are exposed to less wear due to the engaging plane of the brake discs being integral without holes. The life of the brake discs and the brake pads of the brake shoe is therefore longer. A further advantage is achieved by an equal heating of the brake discs, so there are no mechanical tensions and consequently no material cracking. A further advantage of the invention is proved when driving in wet conditions. As the surface of the brake discs is integral, water does not get trapped and does not reduce friction coefficient. Braking is more efficient. An advantage is also the fact that mounting/dismounting of brake discs is simple, rapid and does not require any special tools. The invention will be explained in more detail in the continuation.

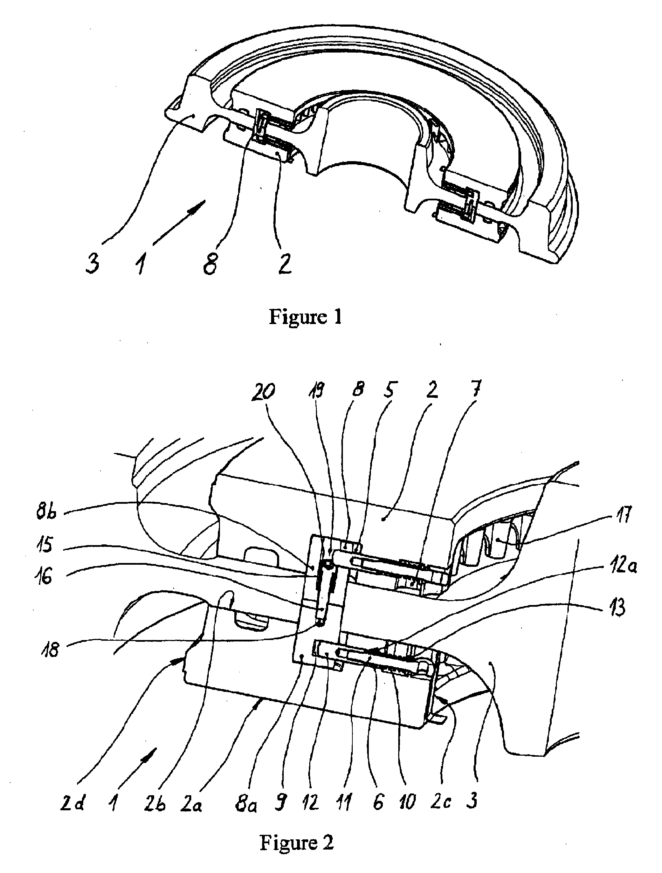

Figure 1: Cross-section of the disc brake on a vehicle wheel
Figure 2: Cross-section of the disc brake on a vehicle wheel - detail

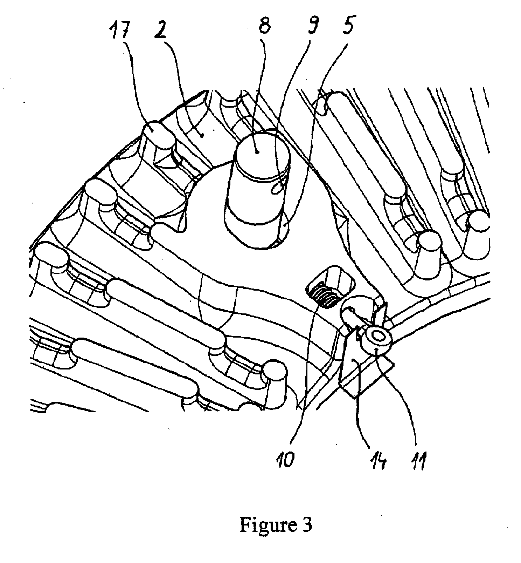

Figure 3: View on the brake disc from the inner side in non-mounted condition

A disc brake 1 especially for rail vehicles comprising:
- two identical annular brake discs 2 arranged in a mounted condition each at one side of a vehicle wheel 3 in a way that two brake planes 2a face outwards, wherein each respective brake disc 2 is provided at its inner side 2b by a plurality of circularly arranged first holes 5 in axial direction of the wheel 3 and a plurality of second holes 6 each extending in radial direction of the wheel 3 and connecting an internal circular plane 2c of the annular brake disc 2 with one of the first holes 5, so that the central axes of the first 5 and the second hole 6 intersect at a substantially right angle, and a plurality of third holes 7 formed in parallel with the first holes 5 and radially distant from same towards the central axis of the brake discs 2,
- a plurality of first pins 8 each arranged in one of the first holes 5 of both brake discs 2 and through the vehicle wheel 3, wherein in each of the first pins 8 two respective fourth holes 9 are formed, the central axes of which substantially coincide with the two central axes of the second holes 6 when the brake discs are in a mounted condition,

- a plurality of eyebolts 11 pre-stressed by a first helical spring 10, each eyebolt being provided with a second pin 12 having an inner thread screwed onto the eyebolt 11, wherein the first spring 10 is arranged on a bolt 11 shank in a way to lean with one end against a plane 12a of the second pin 12 and with a second end against a washer 13 arranged between the first spring 10 and a wall of the third hole 7,
- a plurality of securing elements 14, each of them arranged in a non-mounted condition of the brake discs 2 under a head of the eyebolt 11 and leaning against the internal circular plane 2c of the annular brake disc 2, wherewith the eyebolt 11 is prevented from moving radially in direction towards an external circumference 2d of the brake disc 2.

The first hole 5 is formed in its cross-section longitudinally in radial direction of the brake disc 2 in order to avoid mechanical tensions in the first pin 8 in case of thermal expansion of the brake disc.

The first pin 8 is formed of two parts, wherein a threaded hole 18 is formed in a first part 8a, and a through hole 19 with a step 20 is formed in a second part 8b of the first pin 8. Both parts 8a, 8b of the first pin 8 are connected with each other by a cylindrical screw 16. The screw 16 is tightened into the first part 8a of the first pin, whereas the second part 8b of the first pin has a second spring 15 arranged between the head of the screw 16 and the step 20 and can thus move axially along the screw 16. In this manner, differences in thicknesses of wheels 3, onto which brake discs 2 are mounted, are compensated.

In a condition when not mounted, the eyebolts 11 with the second pin 12 are in a position shifted towards the central axis of the brake disc 2 and secured by means of securing elements 14. When the brake discs are mounted, the securing elements 14 are taken out, the first spring 10 pushes a respective eyebolt 11 in radial direction of the brake disc externally in a way that a respective second pin 12 engages with the fourth hole 9 in the first pin 8, wherewith the brake discs 2 are fixed onto the vehicle wheel 3. When the brake discs 2 are dismounted, a conventional tool (e. g. a screwdriver) is used to take the eyebolt 11 out of the fourth hole 9 and protected by the securing element 14.

The brake discs 2 are provided from the inner side 2b by cooling elements 17.

## Claims

1. A disc brake (1), especially for rail vehicles, comprising two identical annular brake discs (2) arranged in a mounted condition each at one side of a vehicle wheel (3) in a way that two brake planes (2a) face outwards,
**characterized in that** each respective brake disc (2) is provided at its inner side (2b) by a plurality of circularly arranged first holes (5) in axial direction of the wheel (3) and a plurality of second holes (6) each extending in radial direction of the wheel (3) and connecting an internal circular plane (2c) of the annular brake disc (2) with one of the first holes (5), so that the central axes of the first (5) and the second hole (6) intersect at a substantially right angle, and a plurality of third holes (7) formed in parallel with the first holes (5) and radially distant from same towards the central axis of the brake discs (2),
and further comprising
- a plurality of first pins (8) each arranged in one of the first holes (5) of both brake discs (2) and through the vehicle wheel (3), wherein in each of the first pins (8) two respective fourth holes (9) are formed, the central axes of which substantially coincide with the two central axes of the second holes (6) when the brake discs are in a mounted condition,
- a plurality of eyebolts (11) pre-stressed by a first helical spring (10), each eyebolt being provided with a second pin (12) having an inner thread screwed onto the eyebolt (11), wherein the first spring (10) is arranged on the bolt (11) shank in a way to lean with one end against a plane (12a) of the second pin (12) and with a second end against a washer (13) arranged between the first spring (10) and a wall of the third hole (7).

2. Disc brake (1) according to claim 1 **characterized in that** it further comprises a plurality of securing elements (14), each of them arranged in a non-mounted condition of the brake discs (2) under a head of the eyebolt (11) and leaning against the internal circular plane (2c) of the annular brake disc (2), wherewith the eyebolt (11) is prevented from moving radially in direction towards an external circumference (2d) of the brake disc (2).

3. Disc brake (1) according to any preceding claim **characterized in that** the first hole (5) is formed in its cross-section longitudinally in radial direction of the brake disc (2).

4. Disc brake (1) according to any preceding claim **characterized in that** the first pin (8) is formed of two parts (8a, 8b), wherein a threaded hole (18) is formed in the first part (8a), and a through hole (19) with a step (20) is formed in the second part (8b) of the first pin (8).

5. Disc brake (1) according to claim 4 **characterized in that** the parts (8a, 8b) of the first pin (8) are connected with each other by a cylindrical screw (16), wherein the screw (16) is tightened into the first part (8a) of the first pin, whereas the second part (8b) of the first pin has a second spring (15) arranged between the head of the screw (16) and the step (20) and can thus move axially along the screw (16).

6. Disc brake (1) according to any of claims 2 to 5 **characterized in that**, when the brake discs (2) are mounted, the securing elements (14) are taken out so that the eyebolt (11) can move in radial direction of the brake disc (2) externally in a way that a respective second pin (12) engages with the fourth hole (9) in the first pin (8).

7. Disc brake (1) according to any preceding claim **characterized in that** the brake discs (2) are provided from the inner side (2b) by cooling elements (17).
